Europäisches Patentamt

(19) European Patent Office

Office européen des brevets

(11) Numéro de publication: **0 104 974**
**B1**

# (12) FASCICULE DE BREVET EUROPEEN

(45) Date de publication du fascicule du brevet:
**11.03.87**

(51) Int. Cl.⁴: **C 07 F 9/38**, C 07 F 9/40

(21) Numéro de dépôt: **83401701.4**

(22) Date de dépôt: **24.08.83**

(54) **Procédé pour la production de dérivés de l'acide hydroxy-méthylène diphosphonique.**

(30) Priorité: **25.08.82 US 411285**

(43) Date de publication de la demande:
**04.04.84 Bulletin 84/14**

(45) Mention de la délivrance du brevet:
**11.03.87 Bulletin 87/11**

(84) Etats contractants désignés:
**AT BE CH DE FR GB IT LI LU NL SE**

(56) Documents cités:
**EP - A - 0 054 195**
**SU - A - 887 571**
**US - A - 3 855 284**
**US - A - 4 060 546**
**US - A - 4 316 877**

(73) Titulaire: **MINEMET RECHERCHE, 1, avenue Albert Einstein B.P. 106, F-78191 Trappes Cédex (FR)**

(72) Inventeur: **Leroux, Yves, 59, rue Brillat-Savarin, F-75013 Paris (FR)**

(74) Mandataire: **Ricalens, François, MINEMET RECHERCHE B.P. 106 1, avenue Albert Einstein, F-78191 Trappes Cedex (FR)**

## Description

La présente invention a pour objet un nouveau procédé pour la production de dérivés de l'acide hydroxyméthylène disphosphonique à partir de l'acide carboxylique correspondant.

Elle a plus particulièrement pour objet la production dudit dérivé à partir d'acide carboxylique peu soluble dans l'eau, c'est-à-dire d'acide carboxylique dont le nombre de carbones est supérieur à 13.

Ce nouveau procédé est plus spécialement adapté aux acides carboxyliques dont le nombre de carbones est supérieur à 15.

La technique de fabrication de tels produits est connue depuis plusieurs lustres pour les composés dont le nombre d'atomes de carbone est faible et notamment pour les dérivés de l'acide acétique.

Toutefois, les rendements d'une telle réaction sont relativement bas et ces rendements décroissent encore lorsque l'on désire hydroxy-diphosphoner des acides carboxyliques dont le nombre de carbones est supérieur à 13.

La société HENKEL, dans son brevet belge BE-A-619 600, décrit une technique qui permet d'obtenir de l'acide hydroxy-disphosphoné fortement mélangé de composés de départ et dont le rendement par rapport au réactif phosphoré mis en œuvre est relativement faible (de l'ordre de 30% de phosphore converti en acide hydroxy-diphosphonique) comme cela a été vérifié en utilisant cette technique pour la conversion d'acides gras présentant un nombre de carbones relativement élevé.

On pourra se référer à l'essai comparatif reproduisant pour l'acide stéarique les conditions décrites dans ce brevet belge (correspondant au brevet US-A-4 060 546).

Plus récemment, la société ALLIED CORPORATION a obtenu un brevet US-A-4 316 877 où la technique du brevet précédent est reprise pour fabriquer des compositions extractantes. Toutefois, comme on le verra dans l'exemple comparatif qui suit la présente description, cette technique ne permet pas d'améliorer sensiblement celle décrite dans les brevets de HENKEL.

Ces composés ont pris un intérêt grandissant, notamment ceux présentant un nombre suffisamment élevé de carbones, pour être liposolubles tout en étant très hydrophobes, pour l'extraction par échange d'ions de différents métaux et notamment de l'uranium à partir de milieux très acides ou très complexants, comme cela est décrit dans le brevet européen EP-A-0 038 764.

D'une manière générale, il est difficilement acceptable d'avoir un rendement faible vis-à-vis des réactifs mis en œuvre pour tout produit organique dont le coût conditionne l'utilisation à l'échelle industrielle.

En outre, dans les brevets indiqués ci-dessus, un sous-produit de la réaction, l'acide phosphoreux, n'est pas réutilisable puisque non utilisé au cours de la réaction. C'est la raison pour laquelle les recherches qui ont mené à la présente invention ont porté sur l'utilisation de ce sous-produit en quantité aussi élevée que possible.

Compte tenu de ce qui précède, un des buts de la présente invention est de fournir un procédé permettant de produire des composés hydroxydiphosphonés avec un rendement nettement plus élevé, notamment vis-à-vis des réactifs de phosphore III, que les techniques décrites précédemment.

Un autre but de la présente invention est de fournir un procédé du type ci-dessus dont les sous-produits soient recyclables aisément.

Un autre but de la présente invention est de fournir un procédé du type précédent qui permette d'obtenir soit le tétracide diphosphonique correspondant, soit ses esters dont la composition moyenne correspond à un diester diacide.

Un but ultérieur de la présente invention est de fournir une technique de purification du tétracide.

Ces buts, ainsi que d'autres qui apparaîtront par la suite, sont atteints par le nouveau procédé de production d'un produit intermédiaire susceptible de donner l'acide hydroxy-méthylène diphosphonique par hydrolyse comportant:

a) mélange dudit acide carboxylique correspondant avec un réactif P III choisi dans le groupe constitué par les tri-halogénures de phosphore, l'acide phosphoreux et leurs mélanges, le mélange réactionnel étant maintenu à l'abri de l'humidité;

caractérisé par le fait que le rapport moléculaire (P III/RCOOH) entre le réactif P III et ledit acide carboxylique correspondant est compris dans le domaine entre 13/12ème et 18/12ème et par le fait qu'il comporte en outre l'étape:

b) chauffage du milieu réactionnel à une température comprise entre 80 et 110°C pendant une période comprise entre 3 et 20 heures environ.

En effet, de manière tout à fait surprenante, et contrairement à l'idée que peut s'en faire un homme de métier, le fait d'utiliser un rapport moléculaire plus élevé en réactif phosphoreux permet d'améliorer considérablement le rendement en phosphore. Ceci semble aller à l'encontre de la loi d'action de masse ou du moins de l'idée intuitive que l'on s'en fait; ainsi, toute explication nécessite de faire appel à des notions d'intermédiaires réactionnels qui pour l'instant sont mal connus.

En ce qui concerne la température de l'étape a), il convient de noter que la réaction est exothermique au début, sans doute en raison des réactions de déshydratation qui conduit à l'élimination de l'humidité du milieu réactionnel et à la déshydratation du groupe carboxylique. Cette explication n'est toutefois pas limitative.

Il est souhaitable de maintenir une température inférieure à 110°C et de préférence supérieure à 80°C. Toutefois, lorsque l'on utilise pas de diluant, comme cela sera explicité ultérieurement, il est difficile d'obtenir de telles températures dès lors que la température de fusion de l'acide carboxylique correspondant est supérieure aux valeurs ci-dessus. Il est souhaitable, pour que les réactions qui sont censées avoir lieu au début du mélange se fassent, que l'acide carboxylique soit fondu. La température est de préférence choisie entre le point de fusion de l'acide carboxylique correspondant et 110 °C.

Un bon moyen de réaliser une régulation des températures réside dans la vitesse d'addition du tri-halogénure de phosphore. Ainsi, la vitesse d'addition du tri-halogénure de phosphore est choisie de manière que la température du mélange réactionnel n'excède pas 110 °C.

Une valeur optimale du rapport entre le réactif P III et l'acide carboxylique est aux environs de 15/12ème (± 10%).

Selon un mode préféré de l'invention, le réactif P III est constitué par un tri-halgénure de phosphore et l'acide phosphoreux, le rapport moléculaire (PX₃/H₃PO3; X = halogène) entre le tri-halogénure de phosphore et l'acide phosphoreux est compris entre 0,3 et 0,6, de préférence entre 0,4 et 0,5.

Il va de soi qu'il est possible de ne pas utiliser d'acide phosphoreux directement, mais de le produire «in situ» en faisant réagir le tri-halogénure de phosphore utilisé avec de l'eau. Toutefois, ce mode de réalisation présente l'inconvénient de ne pas prévoir le recyclage de l'acide phosphoreux. Toutefois, il convient de noter que l'utilisation partielle de ce mode de réalisation permet d'utiliser des réactifs qui comportent encore un peu d'humidité, une décomposition du tri-halogénure de phosphore pour donner de l'acide phosphoreux permettant une déshydratation poussée des composés.

On pourra ainsi utiliser de l'acide phosphoreux, du diluant et/ou de l'acide carboxylique légèrement humides, à condition de connaître la quantité d'humidité et d'en tenir compte dans les quantités d'acide phosphoreux et des tri-halogénures utilisés.

Pour des raisons d'ordre économique, le tri-halogénure de phosphore préféré est le tri-chlorure de phosphore.

Au cours de la présente étude, il a été démontré qu'il est souhaitable d'ajouter un diluant aprotique polaire qui favorise considérablement la réaction tout en résolvant les éventuelles difficultés liées au point de fusion élevé des acides carboxyliques à transformer en composés hydroxy-diphosphoniques.

Parmi les diluants aprotiques polaires, les meilleurs sont les ethers linéaires, ramifiés et cycliques dont la température d'ébullition est comprise entre 80 et 150 °C, ce qui permet une bonne régulation de la température du mélange réactionnel, et de préférence les sulfones, les meilleurs diluants étant les sulfolanes substitués ou non.

Le chauffage de l'étape b) a lieu en général une demi-heure à une heure après que ledit acide carboxylique correspondant a été mélangé avec le réactif P III, pendant cette période la température dudit mélange réactionnel étant celle déterminée soit par l'exothermicité de la réaction, soit par le point de fusion de l'acide carboxylique.

La durée préférée de chauffage dépend de la température de chauffe choisie, celle-ci dépendant, comme on l'a expliqué précédemment, de la température de fusion de l'acide carboxylique. Plus la température de chauffage est élevée, moins la durée de chauffe est longue et réciproquement plus la température de chauffe est basse, plus la durée de chauffe est longue.

L'homme de l'art peut être guidé d'une part par la considération classique selon laquelle une augmentation de 10 °C correspond à un doublement de la cinétique et d'autre part par le fait qu'à 90 °C une durée satisfaisante est de l'ordre de 10 à 12 heures.

Le mélange réactionnel obtenu à la suite du chauffage contient l'acide hydroxy-diphosphonique seulement en faible proportion mais il contient également un certain nombre de composés de condensation qu'il convient de solvolyser pour libérer l'acide hydroxy-diphosphonique éventuellement contenu.

C'est pourquoi un autre but de la présente invention est atteint par le procédé de production de dérivés de l'acide hydroxy-méthylène diphosphonique à partir de l'acide carboxylique correspondant caractérisé par le fait qu'il consiste à solvolyser le mélange réactionnel contenant le produit intermédiaire obtenu par le procédé décrit cidessus et que ladite solvolyse est réalisée par chauffage avec un solvant présentant une fonction hydroxyle.

La solvolyse peut être réalisée soit par des alcools, auquel cas on obtiendra un ester, ou un mélange d'esters, soit par de l'eau, auquel cas on obtiendra le tétracide hydroxy-diphosphonique.

Lorsque l'on désire obtenir le tétracide, le chauffage est réalisé par reflux en présence d'un acide halohydrique pendant une à 6 heures, la concentration en acide halohydrique étant comprise entre 2 et 6 N. Le rapport volumique entre ledit mélange réactionnel obtenu après l'étape b) et ledit acide halohydrique aqueux est compris entre 1 et 4.

Lorsque la solvolyse est une alcoolyse, la solvolyse est réalisée à une température comprise entre 110 et 120 °C, de préférence entre 120 et 140 °C.

Lorsque le point d'ébullition de l'alcool est inférieur à 110 °C, la solvolyse est réalisée sous pression, par exemple dans un tube scellé, l'utilisation de récipients métalliques étant à éviter.

La solvolyse peut également être réalisée dans un diluant. Il suffit alors de choisir un diluant inerte tant vis-à-vis du mélange réactionnel issu de l'étape b) que vis-à-vis de l'alcool utilisé. On peut utiliser par exemple des éthers lourds ou bien même l'alcool lui-même. La quantité d'alcool mis en œuvre avec le mélange réactionnel issu de l'étape b) est une quantité supérieure à la quantité stoechiométrique nécessaire à l'estérification des deux fonctions acides facilement estérifiables du composé hydroxy-diphosphonique potentiel produit au cours de la réaction, avantageusement une quantité supérieure à la somme de la quantité stoechiométrique nécessaire à l'estérification des deux fonctions acides du composé hydroxydiphosphonique potentiel produit au cours de la réaction et la quantité stoechiométrique nécessaire à l'estérification de l'acide carboxylique résiduel, de préférence une quantité supérieure à deux fois la somme de la quantité stoechiométrique nécessaire à l'estérification des deux fonctions acides facilement estérifiables du composé hydroxy-diphosphonique potentiel produit au cours de la réaction et la quantité stoechiométrique nécessaire à l'estérification de l'acide carboxylique résiduel.

Les exemples qui suivent et qui ne présentent aucun caractère limitatif ont pour but de mettre les spécialistes à même de déterminer aisément les conditions opératoires qu'il convient d'utiliser dans chaque cas particulier.

Exemple 1:
Exemple comparatif

Cet exemple consiste à reproduire l'enseignement du brevet belge BE-A-619 600, correspondant au brevet US-A-4 060 546, en appliquant la technique utilisée par BLASER pour l'acide laurique à l'acide stéarique (exemple 5 du brevet belge et exemple 7 du brevet US).

L'ensemble de la technique a été repris et il est inutile de la répéter ici, la seule différence consistant en le remplacement de l'acide laurique par l'acide stéarique et la quantité totale de mélange réactionnel, puisque la réaction a été réalisée dans les conditions de laboratoire sur des quantités 100 fois moins importante, soit 17,06 grammes d'acide stéarique, 5,49 grammes de trichlorure de phosphore et 1,08 g d'eau.

Afin de pouvoir mieux comparer cet exemple avec les conditions opératoires de la présente invention, on peut signaler que ainsi le rapport entre le réactif P III et l'acide stéarique est de 0,67 cependant que le rapport entre l'acide phosphoreux et le trichlorure de phosphore est de 1. On se trouve donc dans des conditions très difficiles des conditions stoechiométriques de la présente invention.

On récupère, comme indiqué dans le brevet BLASER, un sel de sodium qui contient effectivement la quasi-totalité (plus de 85%) du phosphore mis en jeu.

Toutefois, les spectres de résonance magnétique nucléaire relatifs au phosphore 31 démontrent que ce sel de sodium correspond non à de l'acide hydroxy-diphosphonique pur mais à un mélange de complexes dans lequel l'acide hydroxy-diphosphonique pur n'est qu'en faible proportion et présente quelques ressemblances avec les spectres obtenus sur les mélanges réactionnels issus de l'étape b), c'est-à-dire avant solvolyse.

Ce sel a donc été soumis à une hydrolyse selon les techniques décrites ci-après.

Après adjonction d'acide chlorhydrique concentré 4 N en une quantité égale à deux fois la masse du sel sodique, le chauffage ayant lieu sous reflux à une température voisine de 120–130 °C, le mélange réactionnel est mis en reflux pendant 8 heures environ puis laissé à refroidir. Après refroidissement, la phase est soumise à une extraction par de l'éther. On récupère la solution éthérée et la phase aqueuse résiduelle puis on soumet ces deux phases à un examen en RMN du phosphore 31. La phase éther contient essentiellement de l'acide hydroxy-diphosphonique pendant que la phase aqueuse contient uniquement de l'acide phosphoreux. On dose la quantité de phosphore dans les deux phases et l'on s'aperçoit que seuls 0,36 g de phosphore se trouvent engagés sous forme d'acide hydroxy-diphosphonique pour une quantité mis initialement de 1,23 g, soit donc un rendement inférieur à 30%.

Ce rendement est bien inférieur aux rendements obtenus dans les conditions de la présente invention.

Exemple 2:
Exemple comparatif

Cet exemple reprend dans la mesure du possible les conditions décrites dans l'exemple 1 du brevet US-A-4 316 877 (M.A. TUNICK, colonnes 5 et 6) en utilisant l'acide stéarique comme acide carboxylique initial.

Les conditions décrites sont entièrement reprises sauf en ce qui concerne la température de mélange qui est de 80 °C au lieu de 50 °C. En effet, il est impossible d'obtenir un mélange homogène à partir d'acide stéarique à une température de 50 °C. Il est nécessaire de monter à 80 °C.

On a choisi les conditions des lignes 12 à 20 de la colonne 6 qui favorisent, selon TUNICK, la formation de l'acide hydroxy-diphosphonique. En d'autres termes, à la suite de l'addition, la solution est chauffée à 110 °C pendant 16 heures. On laisse refroidir et l'on obtient un solide blanc.

Toutefois, contrairement à ce qui est indiqué dans les lignes 15 et 16, l'addition d'eau sur ce solide pendant 10 heures sans chauffage n'a aucun effet notable en RMN du phosphore 31. Il n'y a rien ou presque dans la phase aqueuse, contrairement à ce qui est décrit dans le brevet US-A-4 316 877, et le solide mis en solution organique (tétrahydrofurane) montre trois pics dont l'un est très important: 15,88, 14,60 et 14,13 ppm par rapport à l'acide phosphorique ou orthophosphorique. Ce n'est pas de l'acide hydroxy-diphosphonique, c'est un mélange de complexes. En revanche, si ce solide est traité, selon une option de TUNICK, par de l'eau comme décrit précédemment, puis l'ensemble étant chassé sous vide (au Rotavapor) à 90 °C pendant 5 heures, le spectre RMN du phosphore 31 du produit organique insoluble dans l'eau montre que seul un tiers du mélange est de l'acide HDP stéarique à 20,06 ppm par rapport à l'acide phosphorique ou orthophosphorique. On retrouve sensiblement la même proportion que celle obtenue dans l'exemple 1 précédent, ce qui est peu étonnant car les conditions opératoires sont très proches de celles utilisées par BLAZER.

En résumé, si le brevet US-A-4 316 877 semble décrire correctement la réaction avec les produits en $C_9$ et $C_{12}$, l'expression de la ligne 26 qui déclare que le produit en $C_{18}$ est obtenu «in similar manner» paraît erronnée. En effet, d'une part, les solubilités en phase aqueuse ne sont pas du tout celles que l'expérimentateur a trouvé (aucun des produits obtenus n'est hydrosoluble contrairement à ce qui est indiqué), d'autre part, les conditions opératoires ne sont pas réalisables puisque l'on est contraint de chauffer à 80°C au lieu de 50°C, faute de quoi la réaction n'aurait pratiquement pas lieu. Enfin, lorsque l'homme de l'art extrapole les données de TUNICK, il obtient des rendements qui sont bien inférieurs à ceux de la présente invention.

Exemple 3:
Synthèse selon l'invention
Dans un ballon équipé d'un réfrigérant et d'une ampoule à brome, on introduit 200 grammes d'acide stéarique, 48 grammes d'acide phosphoreux anhydre et 60 ml de sulfolane. On ajoute lentement à l'aide de l'ampoule à brome 65 grammes de trichlorure de phosphore en laissant la température s'élever à une valeur de 80°C environ. On chauffe sous agitation pendant 9 heures à une température comprise entre 95 et 100°C, puis on ajoute 600 grammes d'acide chlorhydrique 4 N pendant 8 heures. Après purification du produit (cf. exemple 4), on obtient 84 grammes d'acide stéarique et 135 grammes d'acide hydroxy-diphosphonique purissime.

Analyse:  C = 50,15 %  Calculé:  C = 50,17 %
          H =  8,77 %            H =  9,27 %
          P = 14,41 %            P = 14,4 %

Ce chiffre de 135 grammes correspond à un rendement par rapport à l'acide stéarique ayant réagi, c'est-à-dire en calculant le rendement par rapport à l'acide stéarique non récupéré, c'est-à-dire disparu pendant la réaction et la purification, de 80%. Ce chiffre toutefois est un minimum car la technique de purification qui sera décrite dans l'exemple suivant entraîne des pertes non négligeables d'acide hydroxy-diphosphonique.

En ce qui concerne le bilan phosphore, il a été mis en jeu 32,79 grammes de phosphore au cours de la réaction. 135 grammes d'acide hydroxy-diphosphonique correspondent à 19,1 g de phosphore fixé sous forme d'acide hydroxy-diphosphonique, ce qui correspond à un rendement de fixation du phosphore de 60%, bien supérieur à ceux qui ont été constatés dans les deux exemples précédents. Et encore, ce rendement est un minimum car une partie de l'acide hydroxy-diphosphonique a dû être perdu au cours de la purification.

Par ailleurs, compte tenu du fait que le procédé selon la présente invention utilise l'acide phosphoreux, le phosphore n'ayant pas réagi, qui se trouve pratiquement entièrement sous forme d'acide phosphoreux, peut aisément être recyclé et utilisé pour une nouvelle opération d'hydroxy-diphosphonation.

Exemple 4:
Purification de l'acide hydroxy-diphosphonique à partir de l'hydrolysat
On utilise la propriété de l'acide stéarique d'être insoluble dans l'eau mais soluble dans le tétrachlorure de carbone, le chloroforme, l'éther et le THF, alors que l'acide hydroxy-diphosphonique provenant d'acides carboxyliques lourds est insoluble dans le chloroforme et soluble dans le THF.

La phase organique de l'hydrolysat est donc séparée de la phase aqueuse lavée à l'eau, puis mise en solution dans la quantité minimale de THF ou de THF plus éther. On ajoute ensuite progressivement du chloroforme. On obtient un solide blanc-jaune pâle que l'on sèche à l'étuve sous vide. Cette poudre blanchit à l'air progressivement. Il est à noter qu'il n'y a pas de point de fusion net de ce produit qui se décompose avant fusion.

Exemple 5:
Alcoolyse du mélange réactionnel
Le mélange réactionnel tel que décrit précédemment est soumis à une évaporation sous vide pour en chasser les dernières matières volatiles. Il est ensuite redissous dans de l'alcool n-heptylique en excès (200 ml d'alcool n-heptylique pour 100 grammes de mélange réactionnel après disparition des volatils). Le mélange est chauffé à reflux (120°C) et donne un ester de l'acide hydroxy-diphosphonique dont l'analyse phosphore et carbone correspond à un diester cependant que le spectre RMN réalisé sur l'isotope 31 du phosphore est identique à celui de l'authentique obtenu par l'action de l'acide hydroxy-diphosphonique à partir de l'acide stéarique de haute pureté et à partir de l'agent d'estérification, l'orthoformiate d'éthyle.

Exemple 6
Dans les mêmes conditions que celles décrites dans l'exemple 3, mais dans les rapports stoechiométriques suivants: 12 RCOOH + 10 $H_3PO_3$ + 5 $PCl_3$, on fait réagir de l'acide naphténique (produit vendu par SHELL). On obtient un très bon rendement (41%) en acide HDP naphténoyle par rapport à l'acide naphténique mis initialement.

Exemple 7
Dans les mêmes conditions que précédemment, on a étudié l'influence de la durée du chauffage en fonction de la masse moléculaire. Le tableau ci-après résume les résultats optima obtenus.
Il a été démontré que le chauffage pourrait être plus long ou à température légèrement plus élevée, mais cela ne donne pas de meilleurs rendements après hydrolyse du condensé et l'hydrolyse prend plus de temps pour être complète.

| RCOOH | M | Durées de chauffage |
|---|---|---|
| $CH_3COOH$ | 60 | 1 h à TA puis 2–3 h à 85–90°C |
| $(C_2H_5)_2CHCOOH$ | 116 | 1 h à TA puis 5–7 h 85–90°C |
| $CH_3(CH_2)_5COOH$ | 130 | 1 g à TA puis 6–8 h à 85–90°C |
| Acide naphténique | 310 | 1 h à TA puis 10–12 h à 85–90°C |

M : masse moléculaire
TA : température ambiante

**Exemple 8:**
Etude expérimentale de l'hydrolyse

L'eau n'est pas très efficace pour l'hydrolyse du condensé. Les meilleures conditions ont été étudiées. Il convient d'utiliser une hydrolyse acide au moyen d'acide halohydrique relativement concentré. Les études cinétiques ont montré que les meilleures conditions dépendaient de l'hydro-solubilité des acides carboxyliques utilisés. Lorsque les acides carboxyliques utilisés sont hydrosolubles, les meilleures conditions semblent être une température de reflux de 120–130°C en présence d'acide chlorhydrique de 4 à 6 N.

En ce qui concerne la durée, l'optimum semble se situer pour les acides hydrosolubles aux environs de 4 h 30 (cf. courbe ci-après).

Pour les acides liposolubles, c'est-à-dire pour les acides dont le nombre d'atomes de carbone est supérieur à 15, cet optimum semble se situer aux alentours de 8 heures.

**Revendications**

1. Procédé de production d'un produit intermédiaire susceptible de donner l'acide hydroxyméthylène diphosphonique par hydrolyse comportant:

a) mélange dudit acide carboxylique correspondant avec un réactif P III choisi parmi les tri-halogénures de phosphore, l'acide phosphoreux et leurs mélanges, le mélange réactionnel étant maintenu à l'abri de l'humidité;

caractérisé par le fait que le rapport moléculaire entre le réactif P III et ledit acide carboxylique correspondant est compris dans le domaine entre 13/12ème et 18/12ème et par le fait qu'il comporte en outre l'étape:

b) chauffage du milieu réactionnel à une température comprise entre 80 et 110°C pendant une période comprise entre 3 et 20 heures environ.

2. Procédé selon la revendication 1, caractérisé par le fait que pendant la période du mélange de l'acide carboxylique correspondant avec le réactif P III on maintient la température à une valeur comprise entre le point de fusion dudit acide carboxylique correspondant et 110°C.

3. Procédé selon les revendications 1 et 2 prises séparément, caractérisé par le fait que le mélange dudit acide carboxylique correspondant avec le réactif P III est réalisé en mélangeant l'acide phosphoreux et ledit acide carboxylique correspondant et en ajoutant progressivement le tri-halogénure de phosphore, la vitesse d'addition du tri-halogénure de phosphore étant choisie de manière que la température du mélange réactionnel n'excède pas 110 °C.

4. Procédé selon les revendications 1 à 3 prises séparément, caractérisé par le fait que ledit rapport moléculaire entre ledit acide carboxylique correspondant et le réactif P III est d'environ 15/12ème.

5. Procédé selon les revendications 1 à 4 prises séparément, caractérisé par le fait que dans le réactif P III le rapport moléculaire entre le tri-halogénure de phosphore et l'acide phosphoreux est compris entre 0,3 et 0,6.

6. Procédé selon la revendication 5, caractérisé par le fait que dans le réactif P III le rapport moléculaire entre le tri-halogénure de phosphore et l'acide phosphoreux est compris entre 0,4 et 0,5.

7. Procédé selon les revendications 1 à 6 prises séparément, caractérisé par le fait que l'acide phosphoreux est introduit pour former le mélange réactionnel en le produisant in situ par hydrolyse d'un tri-halogénure, la quantité du tri-halogénure de phosphore étant introduite en même temps que la quantité stoechiométrique d'eau nécessaire pour l'hydrolyse.

8. Procédé selon les revendications 1 à 7 prises séparément, caractérisé par le fait que le mélange réactionnel contient un diluant aprotique polaire en plus du réactif P III et de l'acide carboxylique correspondant.

9. Procédé selon la revendication 8, caractérisé par le fait que ledit diluant aprotique polaire est une sulfone.

10. Procédé selon la revendication 8, caractérisé par le fait que ledit diluant aprotique polaire est un sulfolane substitué.

11. Procédé selon la revendication 8, caractérisé par le fait que ledit diluant aprotique polaire est un sulfolane.

12. Procédé selon la revendication 8, caractérisé par le fait que ledit diluant aprotique polaire est un éther choisi parmi les éthers linéaires, ramifiés et cycliques dont la température d'ébullition est comprise entre 80 et 150 °C.

13. Procédé selon les revendications 1 à 12 prises séparément, caractérisé par le fait que le chauffage de l'étape b) a lieu seulement une demie-heure jusqu'à une heure après que ledit acide carboxylique correspondant a été mélangé avec le réactif P III, pendant cette période la température dudit mélange réactionnel étant celle déterminée par l'exothermicité de la réaction.

14. Procédé de production de dérivés de l'acide hydroxy-méthylène diphosphonique à partir de l'acide carboxylique correspondant caractérisé par le fait qu'il consiste à solvolyser le mélange réactionnel contenant le produit intermédiaire obtenu par le procédé selon les revendications 1 à 13 et que ladite solvolyse est réalisée par chauffage avec un solvant présentant une fonction hydroxyle.

15. Procédé selon la revendication 14, caractérisé par le fait que ledit solvant présentant une fonction hydroxyle est l'eau, le chauffage étant réalisé par reflux en présence d'un acide halohydrique pendant une à 6 heures, la concentration en acide halohydrique étant comprise entre 2 et 6 N.

16. Procédé selon la revendication 15, caractérisé par le fait que la concentration en acide halohydrique est comprise entre 4 et 5 N.

17. Procédé selon les revendications 15 et 16 prises séparément, caractérisé par le fait que le rapport volumique entre ledit mélange réactionnel obtenu après l'étape b) et ledit acide halohydrique aqueux est compris entre 1 et 4.

18. Procédé selon la revendication 14, caractérisé par le fait que ledit solvant présentant une fonction hydroxyle est un alcool choisi dans le groupe des alcools linéaires, ramifiés ou cycliques et par le fait que la solvolyse est réalisée par chauffage à une température comprise entre 110 et 120 °C pendant une durée comprise entre 6 et 15 heures.

19. Procédé selon la revendication 18, caractérisé par le fait que le chauffage est réalisé à une température comprise entre 120 et 140 °C.

20. Procédé selon les revendications 18 et 19 prises séparément, caractérisé par le fait que lorsque les alcools ont un point d'ébullition inférieur à 100 °C la solvolyse est réalisée sous pression.

21. Procédé selon les revendications 18 à 20 prises séparément, caractérisé par le fait que la solvolyse est réalisée dans un diluant.

22. Procédé selon les revendications 18 à 21 prises séparément, caractérisé par le fait que la quantité d'alcool mise en réaction avec le mélange réactionnel issu de l'étape b) est une quantité supérieure à la quantité stoechiométrique nécessaire à l'estérification des deux fonctions acides facilement estérifiables du composé hydroxy-diphosphonique potentiel produit au cours de la réaction.

23. Procédé selon la revendication 22, caractérisé par le fait que la quantité d'alcool mise en réaction avec le mélange réactionnel issu de l'étape b) est une quantité supérieure à la somme de la quantité stoechiométrique nécessaire à l'estérification des deux fonctions acides du composé hydroxy-diphosphonique potentiel produit au cours de la réaction et la quantité stoechiométrique nécessaire à l'estérification de l'acide carboxylique résiduel.

24. Procédé selon la revendication 23, caractérisé par le fait que la quantité d'alcool mise en réaction avec le mélange réactionnel issu de l'étape b) est une quantité supérieure à deux fois la somme de la quantité stoechiométrique nécessaire à l'estérification des deux fonctions acides facilement estérifiables du composé hydroxy-diphosphonique potentiel produit au cours de la réaction et la quantité stoechiométrique nécessaire à l'estérification de l'acide carboxylique résiduel.

**Claims**

1. Process for the production of an intermediate product capable of producing hydroxy-methylene diphosphonic acid by hydrolysis, comprising:

a) mixture of the said corresponding carboxylic acid with a reagent P III selected from amongst the phosphorus tri-halides, phosphorus acid and mixtures of the same, the reaction mixture being protected from humidity;

characterised by the fact that the molecular ratio between the reagent P III and the said corresponding carboxylic acid lies between 13/12 and 18/12 and by the fact that it comprises in addition the (following) stage:

b) heating of the reaction medium to a temperature of between 80 and 110 °C for a period of between approximately 3 and 20 hours.

2. Process according to claim 1, characterised by the fact that during the period of mixing the corresponding carboxylic acid with the reagent P III, the temperature is maintained at a value between the fusion point of the said corresponding carboxylic acid and 110 °C.

3. Process according to claims 1 and 2, taken separately, characterised by the fact that the mixing of the said corresponding carboxylic acid with the reagent P III is effected by mixing the phosphorus acid and the said corresponding carboxylic acid and progressively adding the phosphorus tri-halide, the speed of addition of the phosphorus tri-halide being selected in such a way that the temperature of the reaction mixture does not exceed 100 °C.

4. Process according to claims 1 to 3, taken separately, characterised by the fact that the said molecular ratio between the said corresponding carboxylic acid and the reagent P III is approximately 15/12.

5. Process according to claims 1 to 4, taken separately, characterised by the fact that in the P III reagent, the molecular ratio between the phosphorus tri-halide and the phosphorus acid is between 0.3 and 0.6.

6. Process according to claim 5, characterised by the fact that in the reagent P III the molecular ratio between the phosphorus tri-halide and the phosphorous acid is between 0.4 and 0.5.

7. Process according to claims 1 to 6, taken separately, characterised by the fact that the phosphorous acid is introduced to form the reaction mixture, producing the same in situ by hydrolysis of a tri-halide, the quantity of phosphorus tri-halide being introduced at the same time as the stoichiometric quantity of water required for hydrolysis.

8. Process according to claims 1 to 7, taken separately, characterised by the fact that the reaction mixture contains a polar aprotic diluting agent in addition to the reagent P III and the corresponding carboxylic acid.

9. Process according to claim 8, characterised by the fact that the said polar aprotic diluting agent is a sulphone.

10. Process according to claim 8, characterised by the fact that the said polar aprotic diluting agent is a substituted sulpholane.

11. Process according to claim 8, characterised by the fact that the said polar aprotic diluting agent is a sulpholane.

12. Process according to claim 8, characterised by the fact that the said polar aprotic diluting agent is an ether chosen from amongst linear, branched and cyclic ethers, the boiling point of which is between 80 and 150 °C.

13. Process according to claims 1 to 12, taken separately, characterised by the fact that the heating in stage b) takes place only one half-hour to one hour after the said corresponding carboxylic acid has been mixed with the reagent P III, the temperature of the said reaction mixture during this period being that determined by the exotherm activity of the reaction.

14. Process for the production of derivatives of hydroxy-methylene diphosphonic acid from the corresponding carboxylic acid, characterised by the fact that it consists of hydrolysis of the reaction mixture containing the intermediary product obtained by the process according to claims 1 to 13 and that the said hydrolysis carried out by heating with a solvent having a hydroxyl function.

15. Process according to claim 14, characterised by the fact tha the said solvent having a hydroxyl function is water, the heating being effected by reflux in the presence of a halohydric acid for one to 6 hours, the concentration of halohydric acid being between 2 and 6 N.

16. Process according to claim 15, characterised by the fact that the concentration of halohydric acid is between 4 and 5 N.

17. Process according to claims 15 and 16, taken separately, characterised by the fact that the ratio in volume terms between the said reaction mixture obtained after stage b) and the said aqueous halohydric acid is between 1 and 4.

18. Process according to claim 14, characterised by the fact that the said solvent having a hydroxyl function is an alcohol selected from the group of linear, branched or cyclic alcohols and by the fact that hydrolysis is effected by heating to a temperature of between 110 and 120 °C for a period of between 6 and 15 hours.

19. Process according to claim 18, characterised by the fact that the heating is effected at a temperature of between 120 and 140 °C.

20. Process according to claims 18 and 19, taken separately, characterised by the fact that, when the alcohols have a boiling point below 100 °C, hydrolysis is effected under pressure.

21. Process according to claims 18 to 20, taken separately, characterised by the fact that lyolysis is effected in a diluting agent.

22. Process according to claims 18 to 21, taken separately, characterised by the fact that the quantity of alcohol reacted with the reaction mixture resulting from stage b) is greater than the stoichiometric quantity required for the esterification of the two readily esterifiable acid functions of the potential hydroxy-diphosphonic compound produced during the reaction.

23. Process according to claim 22, characterised by the fact that the quantity of alcohol reacted with the reaction mixture resulting from stage b) is greater than the sum of the stoichiometric quantity required for esterification of the two acid functions of the potential hydroxy-diphosphonic compound produced during the reaction and the stoichiometric quantity required for esterification of the residual carboxylic acid.

24. Process according to claim 23, characterised by the fact that the quantity of alcohol reacted with the reaction mixture resulting from stage b) is two times greater than the sum of the stoichiometric quantity required for esterification of the two readily esterifiable acid functions of the potential hydroxy-diphosphonic compound produced during the reaction and the stoichiometric quantity required for esterification of the residual carboxylic acid.

**Patentansprüche**

1. Verfahren zur Herstellung eines Zwischenprodukts, das zu Hydroxymethylendiphosphonsäure hydrolysiert werden kann, durch

a) Vermischen der entsprechenden Carbonsäure mit einem P(III)-Derivat, ausgewählt unter Phosphortrihalogeniden und/oder phosphorige Säure, wobei das Reaktionsgemisch unter Ausschluss von Feuchtigkeit gehalten wird,

gekennzeichnet durch Verwendung des P(III)-Derivats und der entsprechenden Carbonsäure in einem Molverhältnis von 13/12 bis 18/12 und Durchführung einer weiteren Stufe:

b) Erhitzen des Reaktionsgemisches auf eine Temperatur von 80 bis 110 °C während etwa 3 bis 20 Stunden.

2. Verfahren nach Anspruch 1, dadurch gekennzeichnet, dass während des Vermischens der entsprechenden Carbonsäure mit dem P(III)-Derivat die Temperatur auf einem Wert zwischen dem Schmelzpunkt der entsprechenden Carbonsäure und 110 °C gehalten wird.

3. Verfahren nach Anspruch 1 oder 2, dadurch gekennzeichnet, dass das Vermischen der entsprechenden Carbonsäure mit dem P(III)-Derivat so durchgeführt wird, dass die phosphorige Säure und die entsprechende Carbonsäure vermischt und das Phosphortrihalogenid laufend zugegeben wird, wobei die Zugabegeschwindigkeit des Phosphortrihalogenids so eingestellt wird, dass die Temperatur des Reaktionsgemisches 110 °C nicht übersteigt.

4. Verfahren nach einem der Ansprüche 1 bis 3, dadurch gekennzeichnet, dass die entsprechende Carbonsäure und das P(III)-Derivat in einem Molverhältnis von etwa 15/12 verwendet werden.

5. Verfahren nach einem der Ansprüche 1 bis 4, dadurch gekennzeichnet, dass ein P(III)-Derivat verwendet wird, in dem das Molverhältnis von Phosphortrihalogenid zu phosphoriger Säure von 0,3 bis 0,6 beträgt.

6. Verfahren nach Anspruch 5, dadurch gekennzeichnet, dass ein P(III)-Derivat verwendet wird, in dem das Molverhältnis von Phosphortrihalogenid zu phosphoriger Säure von 0,4 bis 0,5 beträgt.

7. Verfahren nach einem der Ansprüche 1 bis 6, dadurch gekennzeichnet, dass die phosphorige Säure in das Reaktionsgemisch durch in-situ-Hydrolyse eines Trihalogenids eingeführt wird, wobei das Phosphortrihalogenid zu gleicher Zeit wie die für die Hydrolyse notwendige stöchiometrische Menge Wasser eingebracht wird.

8. Verfahren nach einem der Ansprüche 1 bis 7, dadurch gekennzeichnet, dass im Reaktionsgemisch ein polares aprotisches Verdünnungsmittel zusätzlich zu dem P(III)-Derivat und der entsprechenden Carbonsäure verwendet wird.

9. Verfahren nach Anspruch 8, gekennzeichnet durch Verwendung eines Sulfons als polares aprotisches Verdünnungsmittel.

10. Verfahren nach Anspruch 8, gekennzeichnet durch Verwendung eines substituierten Sulfolans als aprotisches polares Verdünnungsmittel.

11. Verfahren nach Anspruch 8, gekennzeichnet durch Verwendung eines Sulfolans als aprotisches polares Verdünnungsmittel.

12. Verfahren nach Anspruch 8, dadurch gekennzeichnet, dass das aprotische polare Verdünnungsmittel unter linearen, verzweigten und cyclischen Äthern mit einer Siedetemperatur von 80 bis 150 °C ausgewählt wird.

13. Verfahren nach einem der Ansprüche 1 bis 12, dadurch gekennzeichnet, dass das Erhitzen der Stufe b) erst eine halbe bis eine Stunde nach dem Vermischen der entsprechenden Carbonsäure mit dem P(III)-Derivat erfolgt, wobei während dieser Zeit die Temperatur des Reaktionsgemisches durch die exotherme Reaktion bestimmt wird.

14. Verfahren zur Herstellung von Derivaten der Hydroxymethylendiphosphonsäure unter Verwendung der entsprechenden Carbonsäure als Ausgangsmaterial, gekennzeichnet durch Solvolyse des Reaktionsgemisches, das das nach einem der Ansprüche 1 bis 13 hergestellte Zwischenprodukt enthält, wobei die Solvolyse durch Erhitzen mit einem eine Hydroxylfunktion aufweisenden Lösungsmittel durchgeführt wird.

15. Verfahren nach Anspruch 14, dadurch gekennzeichnet, dass als eine Hydroxylfunktion aufweisendes Lösungsmittel Wasser verwendet wird und das Erhitzen unter Rückfluss in Gegenwart einer Halogenwasserstoffsäure während 1 bis 6 Stunden durchgeführt wird, wobei die Konzentration an Halogenwasserstoffsäure von 2 bis 6 n beträgt.

16. Verfahren nach Anspruch 15, dadurch gekennzeichnet, dass die Halogenwasserstoffsäure in einer Konzentration von 4 bis 5 n verwendet wird.

17. Verfahren nach Anspruch 15 oder 16, dadurch gekennzeichnet, dass das nach Stufe b) erhaltene Reaktionsgemisch und die wässrige Halogenwasserstoffsäure in einem Volumenverhältnis von 1 bis 4 verwendet werden.

18. Verfahren nach Anspruch 14, dadurch gekennzeichnet, dass als eine Hydroxylfunktion aufweisendes Lösungsmittel ein linearer, verzweigter oder cyclischer Alkohol verwendet wird und die Solvolyse durch Erhitzen auf eine Temperatur von 110 bis 120 °C während 6 bis 15 Stunden durchgeführt wird.

19. Verfahren nach Anspruch 18, dadurch gekennzeichnet, dass auf eine Temperatur von 120 bis 140 °C erhitzt wird.

20. Verfahren nach Anspruch 18 oder 19, dadurch gekennzeichnet, dass Alkohole mit einem Siedepunkt unter 100 °C verwendet werden und die Solvolyse unter Druck durchgeführt wird.

21. Verfahren nach einem der Ansprüche 18 bis 20, dadurch gekennzeichnet, dass die Solvolyse in einem Verdünnungsmittel durchgeführt wird.

22. Verfahren nach einem der Ansprüche 18 bis 21, dadurch gekennzeichnet, dass der mit dem Reaktionsgemisch aus Stufe b) umgesetzte Alkohol in einer grösseren Menge als die stöchiometrische Menge verwendet wird, die zur Veresterung der beiden leicht veresterbaren Säurefunktionen der im Lauf der Reaktion gebildeten Hydroxydiphosphonsäure notwendig ist.

23. Verfahren nach Anspruch 22, dadurch gekennzeichnet, dass der mit dem Reaktionsgemisch aus Stufe b) umgesetzte Alkohol in einer Menge verwendet wird, die über der Summe der stöchiometrischen Menge, die für die Veresterung der beiden Säurefunktionen der im Lauf der Reaktion gebildeten Hydroxydiphosphonsäure notwendig ist, und der stöchiometrischen Menge, die für die Veresterung der Restcarbonsäure notwendig ist, ist.

24. Verfahren nach Anspruch 23, dadurch gekennzeichnet, dass der mit dem Reaktionsgemisch aus Stufe b) umgesetzte Alkohol in einer zweimal höheren Menge verwendet wird als die Summe der für die Veresterung der beiden leicht veresterbaren Säurefunktionen der im Lauf der Reaktion gebildeten Hydroxydiphosphonsäure und der für die Veresterung der Restcarbonsäure notwendigen stöchiometrischen Mengen.